# NEUE EUROPÄISCHE PATENTSCHRIFT

(11) **EP 0 241 673 B2**
(45) Veröffentlichungstag und Bekanntmachung des Hinweises auf die Entscheidung über den Einspruch: **10.11.1993**
(45) Hinweis auf die Patenterteilung: 27.09.1989
(21) Anmeldenummer: 87102252.1
(22) Anmeldetag: 17.02.1987
(51) Int. Cl.: B60T 15/14, B60T 13/66

(54) **Bremswertgeber**
Brake control adjuster
Ajusteur de commande de frein

(30) Priorität: 09.04.1986 DE 3611941
(43) Veröffentlichungstag der Anmeldung: 21.10.1987
(73) Patentinhaber: WABCO Vermögensverwaltungs-GmbH, D-30432 Hannover (DE)
(72) Erfinder: Reinecke, Erich, Dipl.-Ing., D-3167 Burgdorf (DE)
(74) Vertreter: Schrödter, Manfred, Dipl.-Ing.

(56) Entgegenhaltungen:
- EP-A- 0 190 411
- EP-A- 0 195 579
- DE-A- 1 961 039
- DE-A- 2 043 840
- DE-A- 2 619 775
- DE-A- 2 839 291
- DE-A- 2 926 017
- DE-A- 2 937 657
- US-A- 2 091 086
- Druckschrift der Robert Bosch GmbH, Stuttgart. "Betriebsbremsventile",Nr. VDT-AKB 3/1 vom September 1976
- Buch "Variable Resistors and Potentiometers" von G.W.A. Dummer, Verlag Isaac Pitman & Sons Ltd., London 1963
- Tietze, Schenk, "Halbleiterschaltungstechnik", 6. Ausgabe, 1983 Springer Verlag, Berlin Heidelberg New York Tokio, Seiten 316 - 325

## Beschreibung

Die Erfindung bezieht sich auf einen Bremswertgeber gemäß dem Oberbegriff des Patentanspruchs 1.

Derartige Bremswertgeber dienen in Nutzfahrzeugen mit pneumatischer Bremsanlage zur Erzeugung eines Steuerdruckes für die Bremszylinder.

In Bremsanlagen mit elektrischer Bremssteuerung erzeugen die Bremswertgeberein entsprechendes elektrisches Ausgangssignal, das wiederum zur Steuerung des Bremszylinderdruckes dient. In diesem Fall werden die Bremszylinder des Fahrzeugs über analog oder digital ansteuerbare Magnetventile (Modulatoren) mit Druckluft versorgt.

In einem pneumatischen Bremswertgeber (Trittplattenventil) moderner Bauart wird die vom Fahrer aufgebrachte Fußkraft über eine Trittplatte auf eine Gummifeder mit nichtlinearer Kraft-Weg-Kennlinie gegeben. Hierdurch läßt sich ein pneumatischer Steuerdruck erzielen, der mit dem Weg bzw. dem Kippwinkel der Trittplatte progressiv anwächst. Der Sinn dieser Maßnahme ist, im ersten Bereich des Pedalweges (Teilbremsung) mit niedrigem Steuerdruck ein feinfühliges Bremsen zu ermöglichen. Im letzten Bereich des Pedalweges (Vollbremsung) steigt dagegen der Bremsdruck stärker an. Dem so erzielten Bremsdruckverlauf entspricht auch die vom Fahrer aufzubringende Fußkraft.

Ein derartiges Trittplatten-Bremsventil der eingangs genannten Art ist aus der DE-A29 37 657.6 bekannt. An dem bekannten Ventil ist ferner ein Potentiometer angebaut, welches zur Steuerung eines Retarders und zur Abgabe bestimmter elektrischer Schaltsignale dient.

Nachteilig bei der Verwendung einer Gummifeder ist deren Temperaturabhängigkeit und Alterungsverhalten.

Diese Nachteile treten bei Verwendung von Stahlfedern bzw. Metallfedern nicht auf. Hier ist aber wiederum die gewünschte Progressivität des ausgesteuerten Bremsdruckes nur mit erhöhtem Aufwand,z. B. durch Parallelschaltung mehrerer unterschiedlicher Federn, oder durch eine Feder mit steigender Drahtstärke, zu erreichen.

Aus der DE-A-20 43 840 ist weiterhin ein Bremswertgeber bekannt bei dem sich das Pedal an einer Feder abstützt und bei dem die Verstellung des Pedal mittels eines Potentiometers erfaßt wird. Das von diesen Potentiometer gelieferte elektrische Signal wird einem die Betriebsbremse steuerndem Steuergerät zugeführt.

Aus der DE-A 19 61 039 ist weiter ein Bremswertgeber bekannt, bei dem die auf ein Bremspedal wirkende Fußkraft über eine Stahlfeder auf eine Kraftmeßvorrichtung gelangt. Die Kraft wird hier in eine elektrische Größe umgewandelt, welche einem elektronischen Steuergerät als Sollwert dient. Der an dem Bremszylinder des Fahrzeugs wirkende Bremsdruck (Istwert) wird proportional dem Sollwert eingeregelt. Die Bremskraft steigt also porportional bzw. linear gemäß der aufgebrachten Fußkraft an.

Der Erfindung liegt die Aufgabe zugrunde, einen Bremswertgeber der eingangs genannten Art anzugeben, der ein mit dem Pedalweg progressiv ansteigendes Steuersignal abgibt, aber trotzdem mit einer relativ einfachen Stahlfeder auskommt.

Diese Aufgabe wird durch die in den Patentansprüchen 1 und 2 angegebene Ausbildung der Erfindung gelöst. Die Unteransprüche enthalten zweckmäßige Weiterbildungen der Erfindung.

Ein wesentlicher Vorteil der Erfindung liegt darin, daß eine vollständige Entkopplung der Verläufe von Fußkraft und Bremskraft erreichbar ist. Durch eine entsprechende Ausbildung der Elektronik läßt sich damit jeder gewünschte Verlauf der Bremskraft erzielen.

Die Erfindung wird im folgenden anhand einer Zeichnung näher erläutert. Diese zeigt in schematischer Darstellung in
Fig. 1 einen erfindungsgemäßen Bremswertgeber mit Kraftsensor, in
Fig. 2 einen erfindungsgemäßen Bremswertgeber mit Wegsensor, und in
Fig. 3 ein Diagramm, in dem die Pedalkraft und der hinter einem Bremsmodulator ausgesteuerte Bremsdruck über dem Pedalweg eingetragen ist.

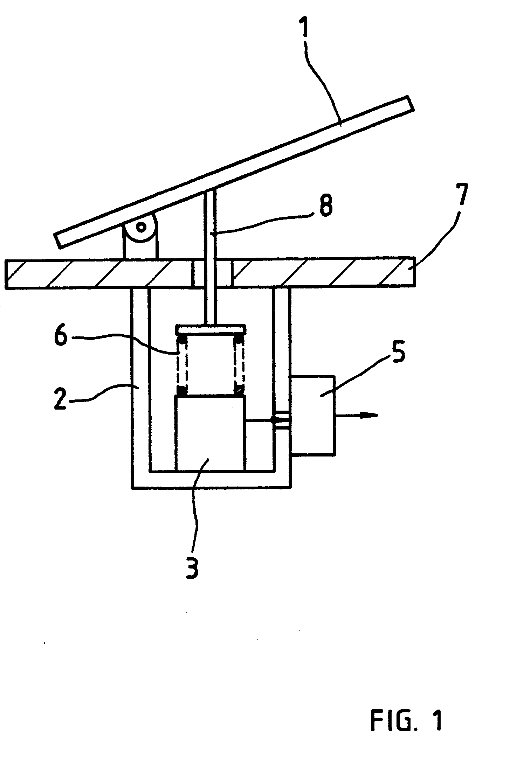

Gemäß einer ersten Ausführungsform nach Fig. 1 besteht der Bremswertgeber aus einer Trittplatte (1), die an einer Grundplatte (7) in bekannter Weise kippbar gelagert ist.

Die Fußkraft des Fahrers wird über eine Stange (8) auf eine Stahlfeder (6) gegeben. Die Kennlinie der Feder ist linear oder leicht progressiv ausgebildet. Die Stahlfeder (6) stützt sich auf einem Kraftsensor (3) ab. Der Kraftsensor (3) ist ein Serienbauteil, dessen Kennlinie festliegt und etwa linear ist. Stahlfeder (6) und Kraftsensor (3) befinden sich innerhalb eines Gehäuses (2). Das elektrische Ausgangssignal des Kraftsensors (3) wird zu einer Elektronik (5) geleitet, welche hier außen am Gehäuse (2) befestigt ist. Die Elektronik (5) dient dazu, das in etwa lineare elektrische Ausgangssignal des Kraftsensors (3) in ein progressives Signal umzuwandeln. Die Elektronik kann auch innerhalb des Gehäuses (2) oder an anderer Stelle angeordnet sein. Sie kann z.B. einen Kennlinienspeicher enthalten, der in bekannter Weise verschiedene Eingangsgrößen bestimmten Ausgangsgrößen zuordnet. Das Ausgangssignal der Elektronik (5) wird nach weiterer Verarbeitung dazu benutzt, ein Magnetventil (Modulator) zu steuern (nicht dargestellt). Der Modulator reguliert die Druckmittelzufuhr zu den Radbremsen.

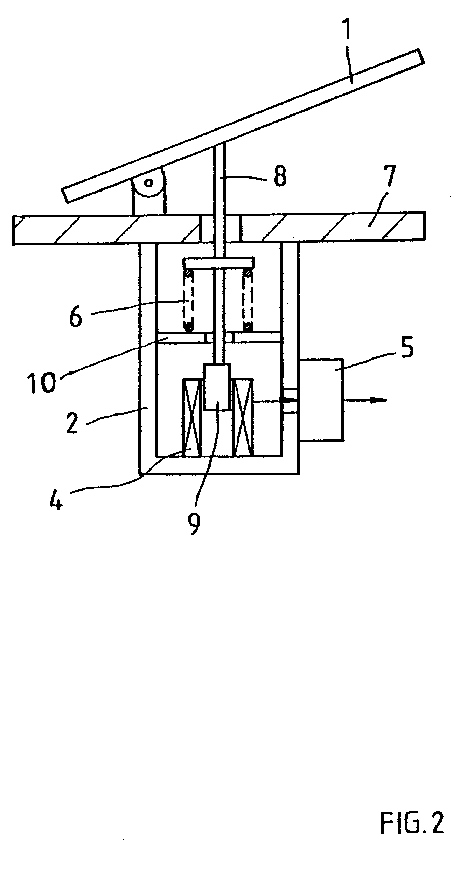

In Fig. 2 ist eine zweite Ausführungsform des Bremswertgebers dargestellt, welcher anstelle eines Kraftsensors einen Wegsensor (4) enthält. Gleiche Teile sind mit gleichen Bezugsziffern wie in Fig. 1 versehen. Die Stahlfeder (6) stützt sich hier auf einer Zwischenwand (10) des Gehäuses (2) ab. Die Bewegung der Trittplatte (1) wird über eine Stange (8) auf einen Kern (9) des Wegsensors (4) geleitet. Das elektrische Ausgangssignal des Wegsensors (4), welcher hier als Spule mit verschiebbarem Kern ausgebildet ist, wird wiederum einer Elektronik (5) zugeleitet.

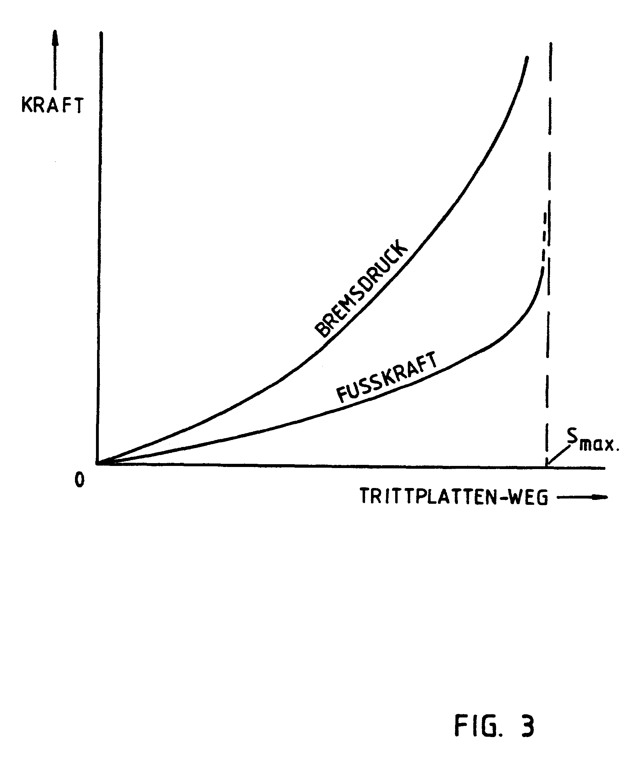

In dem Diagramm der Fig. 3 ist das Ausgangssignal des Bremswertgeber nach den Figuren 1 und 2 aufgezeichnet. Über den Weg bzw. dem Drehwinkel der Trittplatte (1) steigt die vom Fahrer aufzubringende Fußkraft in etwa linear an. Reibungskräfte und unterschiedliche Angriffswinkel der Fußkraft sind hier vernachlässigt. Am Ende des Trittplatten-Weges bei sₘₐₓ fährt die Trittplatte gegen einen Endanschlag (nicht dargestellt), z.B. einen Gummipuffer. Hierdurch steigt die Fußkraft im Endbereich sehr steil an.

Durch die elektronische Umformung der Sensorkennlinien in der Elektronik (5) steigt dagegen der in den Bremszylinder ausgesteuerte pneumatische Bremsdruck in gewünschter Weise progressiv an. Dabei ist im größten Bereich des Trittplatten-Weges erfindungsgemäß der Anstieg der Fußkraft weniger progressiv als der Anstieg des Bremsdruckes. Das Diagramm zeigt nur den qualitativen Verlauf, d. h. die Maßstäbe von Fußkraft und Bremsdruck sind nicht identisch.

In einer Abwandlung der Erfindung läßt sich die beschriebene progressive Ausgangs-Kennlinie auch erreichen, indem solche Sensoren (3, 4) ausgewählt werden, die von sich aus eine entsprechende Nichtlinearität aufweisen. Dies kann im Fall des Wegsensors (4) besonders einfach durch eine gestufte Wicklung seiner Spule erreicht werden. Nachteilig ist jedoch, daß dann im allgemeinen keine serienmäßigen Sensoren verwendbar sind.

## Patentansprüche

1. Bremswertgeber mit einer Trittplatte, durch welche ein Bremsdruck in einem Fahrzeug steuerbar ist, gekennzeichnet durch die Kombination folgender Merkmale:
a) Die Trittplatte (1) stützt sich auf einer Feder (6) ab, welche in ihrem größten Teil des Arbeitsbereichs eine lineare oder leicht progressive Kennlinie besitzt,
b) die von der Trittplatte (1) übertragene Kraft oder die Verstellung der Trittplatte (1) wird von einem elektronischen Sensor (3, 4) abgefühlt;
c) es ist eine Elektronik (5) vorgesehen, welche eine angenähert lineare Kennlinie des Sensors (3, 4) in eine progressive Kennlinie umwandelt,
d) daß im Falle von leicht progressiver Kennlinie der Feder die Progressivität der Kennlinie für die Trittplattenkraft über dem Trittplattenweg geringer ist, als die des Bremsdruckes über dem Trittplattenweg.

2. Bremswertgeber mit einer Trittplatte, durch welche ein Bremsdruck in einem Fahrzeug steuerbar ist, gekennzeichnet durch folgende Merkmale:
a) Die Trittplatte (1) stützt sich auf einer Feder (6) ab, welche in ihrem größten Teil des Arbeitsbereichs eine lineare oder leicht progressive Kennlinie besitzt,
b) die von der Trittplatte (1) übertragene Kraft oderdie Verstellung der Trittplatte (1) wird von einem elektronischen Sensor (3, 4) abgefühlt;
c) der Sensor (3, 4) ist so ausgebildet, daß er über den Weg der Trittplatte (1) ein progressives Ausgangssignal abgibt,
d) daß im Falle von leicht progressiver Kennlinie der Federdie Progressivitätder Kennlinie für die Trittplattenkraft über dem Trittplattenweg geringer ist, als die des Bremsdruckes über dem Trittplattenweg.

3. Bremswertgeber nach Anspruch 1 oder 2, dadurch gekennzeichnet, daß sich die Feder (6) auf einem Kraftsensor (3) abstützt.

4. Bremswertgeber nach Anspruch 1 oder 2, dadurch gekennzeichnet, daß sich die Feder (6) auf einer Zwischenwand (10) abstützt, und der Weg der Trittplatte (1) von einem Wegsensor (4) meßbar ist.

## Claims

1. Brake control adjuster having a pedal by means of which a brake pressure in a vehicle can be controlled, characterised by a combination of the following features:
a) the pedal (1) is supported on a spring (6) which, over the major part of its working range, has a linear or slightly progressive characteristic;
b) the force transmitted by the pedal (1)orthe displacement of the pedal (1) is sensed by an electronic sensor (3,4);
c) an electronics system (5) is provided which converts an approximately linear characteristic of the sensor (3, 4) into a progressive characteristic;
d) in the case of a slightly progressive characteristic of the spring the progression of the characteristic of the pedal force against the pedal displacement is less than that of the brake pressure against the pedal displacement.

2. Brake control adjuster having a pedal by means of which a brake pressure in a vehicle can be controlled, characterised by the following features:
a) the pedal (1) is supported on a spring (6) which, over the major part of its working range, has a linear or slightly progressive characteristic;
b) the force transmitted by the pedal (1) or the displacement of the pedal (1) is sensed by an electronic sensor (3, 4);
c) the sensor (3, 4) is in such a form that is produces a progressive output signal in response to the displacement of the pedal (1);
d) in the case of a slightly progressive characteristic of the spring the progression of the characteristic of the pedal force against the pedal displacement is less than that of the brake pressure against the pedal displacement.

3. Brake control adjuster according to claim 1 or 2, characterised in that the spring (6) is supported on a force sensor (3).

4. Brake control adjuster according to claim 1 or 2, characterised in that the spring (6) is supported on an intermediate wall (10), and the displacement of the pedal (1) can be measured by a displacement sensor (4).

## Revendications

1. Générateur de valeur de freinage comprenant une pédale permettant le réglage de la pression de freinage dans un véhicule, caractérisé par la combinaison des caractéristiques suivantes :
a) la pédale (1) prend appui sur un ressort (6) qui présente une caractéristique linéaire ou légèrement progressive dans la plus grande partie de son domaine de service ;
b) la force transmise par la pédale (1), ou le déplacement de la pédale (1), est détectée par un capteur électronique (3, 4) ;
c) il est prévu une électronique (5) qui transforme une caractéristique approximativement linéaire du capteur (3, 4) en une caractéristique progressive ;
d) dans le cas d'une caractéristique légèrement progressive du ressort, la progressivité de la caractéristique pour la force à exercer sur la pédale en fonction du déplacement de la pédale est plus faible que celle de la pression de freinage en fonction du déplacement de la pédale.

2. Générateur de valeur de freinage comprenant une pédale permettant le réglage d'une pression de freinage dans un véhicule, caractérisé par les caractéristiques suivantes :
a) la pédale (1) prend appui sur un ressort (6) qui présente une caractéristique linéaire ou légèrement progressive dans la plus grande partie de son domaine de service ;
b) la force transmise par la pédale (1), ou le déplacement de la pédale (1), est détectée par un capteur électronique (3, 4) ;
c) le capteur (3, 4) est conçu de manière qu'il délivre un signal de sortie progressif en fonction du déplacement de la pédale (1) ;
d) dans le cas d'une caractéristique légèrement progressive du ressort, la progressivité de la caractéristique pour la force à exercer sur la pédale en fonction du déplacement de la pédale est plus faible que celle de la pression de freinage en fonction du déplacement de la pédale.

3. Générateur selon la revendication 1 ou 2, caractérisé en ce que le ressort (6) prend appui sur un capteur dynamométrique (3).

4. Générateur selon la revendication 1 ou 2, caractérisé en ce que le ressort (6) prend appui sur une cloison intermédiaire (10) et le déplacement de la pédale (1) est mesurable par un capteur de déplacement (4).
